# EUROPEAN PATENT APPLICATION

(11) **EP 1 347 360 A2**
(43) Date of publication of application: **24.09.2003**
(21) Application number: 03006400.0
(22) Date of filing: 20.03.2003
(51) Int. Cl.: G06F 1/26

(54) **Power supply control device**

(30) Priority: 20.03.2002 JP 2002079617
(71) Applicant: Kabushiki Kaisha Toshiba, Tokyo (JP)
(72) Inventor: Motoe, Hironori, Kabushiki Kaisha Toshiba, Tokyo 105-8001 (JP); Hayashi, Kiyoji, Kabushiki Kaisha Toshiba, Tokyo 105-8001 (JP); Sato, Shigenobu, Kabushiki Kaisha Toshiba, Tokyo 105-8001 (JP)
(74) Representative: Henkel, Feiler, Hänzel

(57) **Abstract**

According to this invention, a power supply control device includes a determining unit (12) which determines whether connection to an information processing apparatus is established, a power supply control switch (14) which controls a power supply voltage applied via a power supply line to a peripheral device connected to the information processing apparatus, and a controller (13) which, when the determining means determines that connection is established, controls the power supply control switch to apply a power supply voltage to the peripheral device via the power supply line, and, when the determining means determines that no connection is established, controls the power supply control switch to interrupt a power supply voltage applied to the peripheral device.

## Description

The present invention relates to a power supply control device, and more particularly, a power supply control device used in an information recording/playback apparatus.

In recent years, along with the technical progress of a personal computer, many peripheral devices such as a printer, CD-ROM drive, external HDD, and the like are connected to the personal computer.

When such peripheral devices are to be used, except for a device whose power supply voltage is applied from a personal computer, each peripheral device is generally connected to the personal computer via a cable such as a USB while independently connecting to a power supply.

A conventional case wherein a peripheral device is connected to the personal computer poses the following problem.

Assume that the personal computer is not used, or that the personal computer is used but the peripheral device is not used. In this case, when the personal computer is connected to the peripheral device whose power supply is turned on, a power supply voltage is always applied to the peripheral device, so power is unnecessarily consumed.

The present invention has been made in consideration of the above situation, and has as its object to provide a power supply control device which can improve power consumption efficiency by applying a power supply voltage to a peripheral device only if needed.

To achieve the above object, according to a first aspect of the present invention, there is provided a power supply control device comprising determining means for determining whether connection to an information processing apparatus is established, a power supply control switch which controls a power supply voltage applied via a power supply line to a peripheral device connected to the information processing apparatus, and control means for, when the determining means determines that connection is established, controlling the power supply control switch to apply a power supply voltage to the peripheral device via the power supply line, and for, when the determining means determines that no connection is established, controlling the power supply control switch to interrupt a power supply voltage applied to the peripheral device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the arrangement of a power supply control system according to the first embodiment of the present invention;
FIG. 2 is a view showing a recording/playback apparatus 3 having a power supply control device according to the first embodiment of the present invention;
FIG. 3 is a view showing the arrangement of a power supply control switch 14;
FIG. 4 is a flow chart for explaining the operation of the power supply control device when the power supply of a peripheral device is turned on;
FIG. 5 is a flow chart for explaining the operation of the power supply control device when the power supply of the peripheral device is turned off;
FIG. 6 is a block diagram showing the arrangement of the power supply control system according to the second embodiment of the present invention;
FIG. 7 is a block diagram showing the recording/playback apparatus 3 having a power supply control device according to the second embodiment of the present invention;
FIG. 8 is a flow chart for explaining the operation of the power supply control device when the power supply of the peripheral device is turned on;
FIG. 9 is a flow chart for explaining the operation of the power supply control device when the power supply of the peripheral device is turned off;
FIG. 10 is a block diagram showing the arrangement of a power supply control system according to the third embodiment of the present invention;
FIG. 11 is a block diagram showing a recording/playback apparatus 3 having a power supply control device according to the fourth embodiment of the present invention;
FIG. 12 is a block diagram showing the arrangement of a power supply control system according to the fifth embodiment of the present invention;
FIG. 13 is a flow chart for explaining the operation when the peripheral device changes from a wait state to an activated state; and
FIG. 14 is a flow chart for explaining the operation of the power supply control system when the peripheral device is shifted to the wait state.

A power supply control system according to each embodiment of the present invention will be described below with reference to the accompanying drawing.

### <First Embodiment>

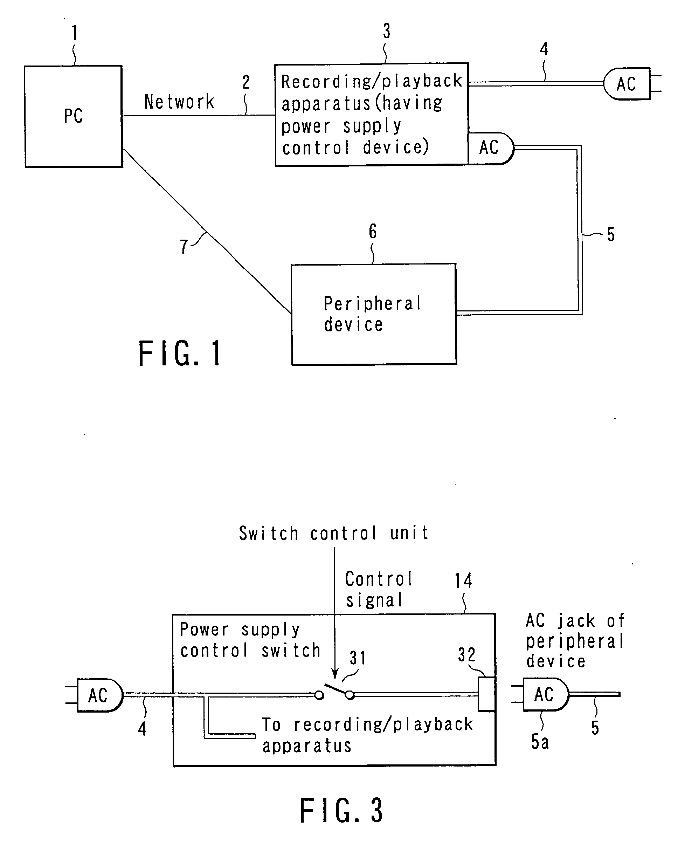

FIG. 1 is a block diagram showing the arrangement of a power source control system according to the first embodiment of the present invention.

As shown in FIG. 1, a personal computer 1 (to be referred to as a PC, hereinafter) is connected via a network 2 to a recording/playback apparatus 3 having a power supply control device according to the first embodiment of the present invention.

A power supply voltage is applied to the recording/playback apparatus 3 via an AC power supply line 4. The recording/playback apparatus 3 applies a power supply voltage to a peripheral device 6 via an AC power supply line 5 as needed. The PC 1 is also connected to the peripheral device 6 via a peripheral device interface 7 such as a USB.

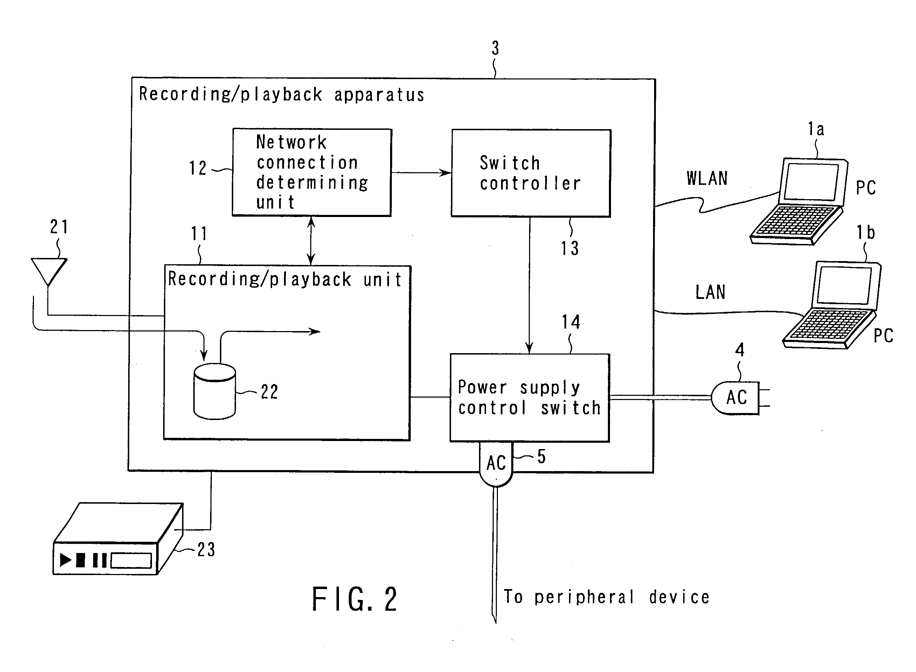

FIG. 2 is a block diagram showing the recording/ playback apparatus 3 having the power supply control device according to the first embodiment of the present invention.

As shown in FIG. 2, the recording/playback apparatus 3 is comprised of a recording/playback unit 11, network connection determining unit 12, switch controller 13, and power supply control switch 14. Note that the same reference numerals as in FIG. 1 denote the same parts in FIG. 2.

The recording/playback unit 11 implements the original function of the recording/playback apparatus 3. For example, the recording/playback unit 11 has a function of storing a television image received by an antenna 21 or an image from the videocassette recorder 23 in a storage device 22 while transmitting that image to PCs 1a and 1b, thus playing back the transmitted image on the PC sides. This is not directly relevant to the present invention, and a detailed description thereof will be omitted.

The network connection determining unit 12 determines whether the network connection to PC is established.

The switch controller 13 controls the power supply control switch 14 on the basis of a determination result by the network connection determining unit 12. More specifically, if the network connection determining unit 12 determines that network connection is established, the switch controller 13 controls the power supply control switch 14 to apply a power supply voltage applied from the AC power supply line 4 also to a peripheral device via the AC power supply line 5. If the network connection determining unit 12 determines that no network connection is established, the switch controller 13 controls power supply control switch 14 not to apply the power supply voltage from the AC power supply line 4 to the peripheral device.

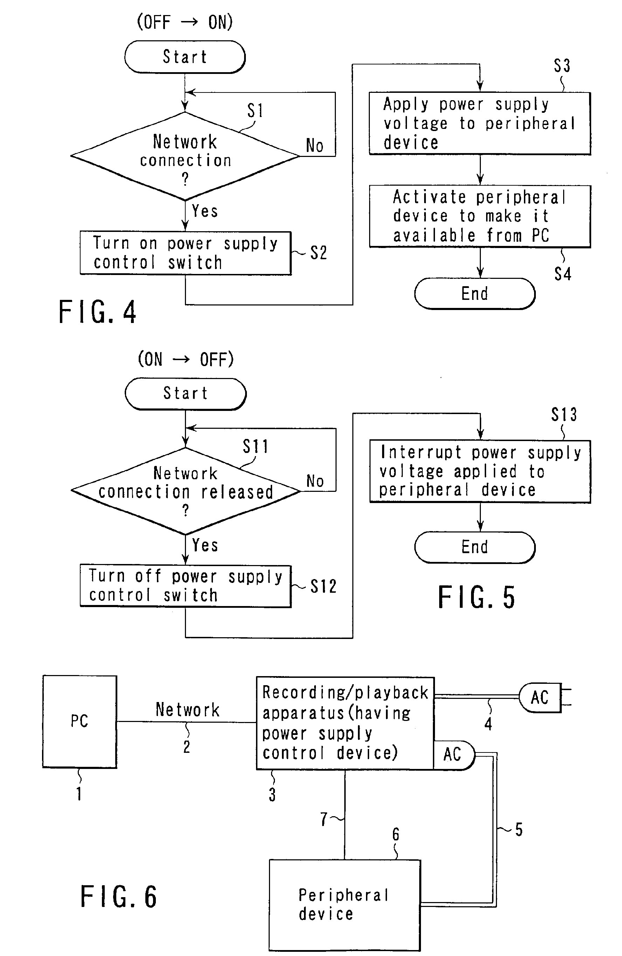

FIG. 3 is a view showing the arrangement of the power supply control switch 14.

As shown in FIG. 3, a power supply voltage from the AC power supply line 4 is applied to the recording/playback unit and also applied to the peripheral device via the AC power supply line 5 of the peripheral device by closing a switch 31.

An AC jack 5a of the AC power supply line 5 of the peripheral device can be connected to an AC tap 32 formed in the power supply control switch 14. The switch 31 is opened/closed on the basis of a control signal from a switch control unit. More specifically, when network connection is established, the switch 31 is turned on to apply a power supply voltage to the peripheral device. When no network connection is established, the switch 31 is turned off to interrupt a power supply voltage applied to a peripheral device.

The operation of the power supply control device according to the first embodiment of the present invention will be described with reference to the flow charts of FIGS. 4 and 5.

FIG. 4 is a flow chart for explaining the operation of the power supply control device when the power supply of a peripheral device is turned on.

First, whether the power supply control device is connected to a PC via a LAN is determined (S1). If Yes in S1, the power supply control switch 14 is turned on (S2) to apply a power supply voltage to the peripheral device (S3). With this operation, the peripheral device is activated to make it available from the PC (S4).

FIG. 5 is a flow chart for explaining the operation of the power supply control device when the power supply of the peripheral device is turned off.

First, whether network connection is released is determined (S11). If Yes in S11, the power supply control switch is turned off (S12) to interrupt a power supply voltage applied to the peripheral device (S13).

Therefore, according to the power supply control system in this embodiment, a user can manage the power supply without considering the power supply of the peripheral device. In addition, since a power supply voltage is applied to the peripheral device only when the network connection to the PC is established, power saving can be achieved.

### <Second Embodiment>

A power supply control system according to the second embodiment of the present invention will be described below.

FIG. 6 is a block diagram showing the arrangement of the power supply control system according to the second embodiment of the present invention. Note that the same reference numerals as in FIG. 1 denote the same parts in FIG. 6.

As shown in FIG. 6, the system shown in FIG. 6 is different from the system shown in FIG. 1 that a peripheral device 6 is connected to a recording/playback apparatus 3 via a peripheral device interface 7 and controlled by a PC 1 via the recording/playback apparatus 3.

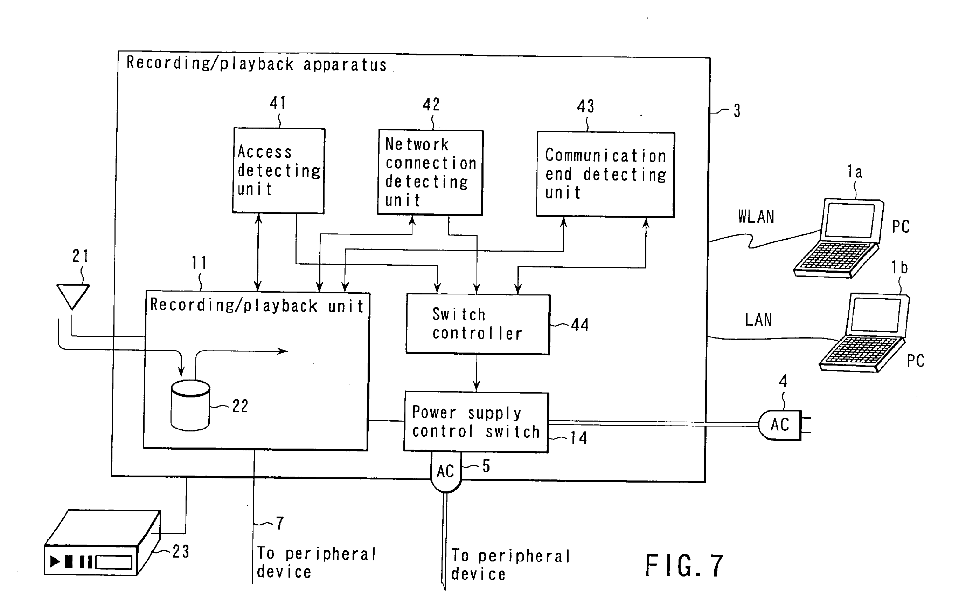

FIG. 7 is a block diagram showing the recording/ playback apparatus 3 having a power supply control device according to the second embodiment of the present invention. Note that a description of the same parts as in FIGS. 1 and 2 is omitted, and only different parts will be described.

An access detecting unit 41 detects an access from the PC 1 to the peripheral device.

A network connection detecting unit 42 detects network connection interruption between the recording/ playback apparatus and PC.

A communication end detecting unit 43 detects that communication between the recording/playback apparatus 3 and PC 1 ends.

When the access detecting unit 41 detects an access from the PC 1 to the peripheral device, a switch controller 44 controls a power supply control switch 14 to apply a power supply voltage applied from an AC power supply line 4 to a recording/playback unit 11 and the peripheral device via an AC power supply line 5.

If the network connection detecting unit 42 or the communication end detecting unit 43 detects that the communication between the recording/playback apparatus 3 and PC 1 ends, the power supply control switch 14 is controlled to interrupt the power supply voltage applied from the AC power supply line 4 to the peripheral device.

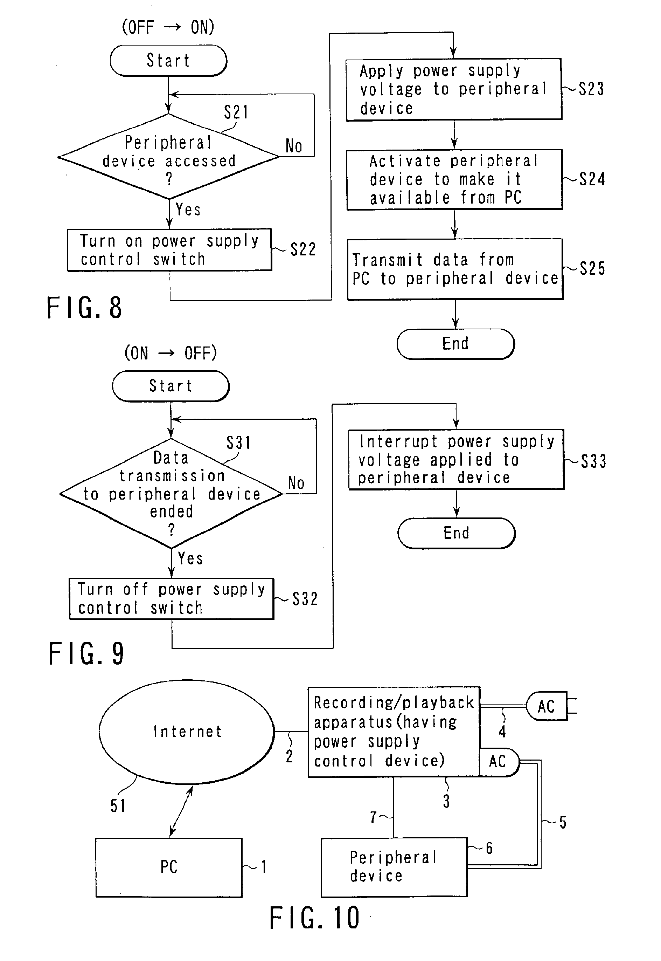

The power supply control system in the second embodiment of the present invention will be described with reference to the flow charts of FIGS. 8 and 9.

FIG. 8 is a flow chart for explaining the operation of the power supply control device when the power supply of the peripheral device is turned on.

First, whether the PC accesses the peripheral device is determined (S21). If Yes in S21, the power supply control switch 14 is turned on (S22) to apply a power supply voltage to the peripheral device (S23). With this operation, the peripheral device is activated to make it available from the PC (S24). Thereafter, data from the PC is transmitted to the peripheral device (S25).

FIG. 9 is a flow chart for explaining the operation of the power supply control device when the power supply of the peripheral device is turned off.

First, whether data transmission to the peripheral device ends is determined (S31). If Yes in S31, the power supply control switch is turned off (S32) to interrupt a power supply voltage applied to the peripheral device (S33).

Therefore, according to the power supply control system of this embodiment, since the power supply of the peripheral device is controlled by detecting an access from the PC, power saving greater than that in the power supply control system of the first embodiment can be achieved.

In addition, since the peripheral device is connected to the apparatus having the power supply control device, the PC need not have a plurality of interfaces and is sufficient if the apparatus having the power supply control device has an interface.

### <Third Embodiment>

A power supply control system according to the third embodiment of the present invention will be described.

The above embodiments describe the case wherein the apparatus having the power supply control device is connected to the PC via the network.

A recording/playback apparatus having the power supply control system according to the third embodiment of the present invention has an Internet connection function (e.g., a modem or router). Note that since the Internet connection function itself is well-known technique, a detailed description is omitted.

FIG. 10 is a block diagram showing the arrangement of the power supply control system according to the third embodiment of the present invention. The same reference numeral as in FIG. 1 denote the same parts in FIG. 10. As shown in FIG. 10, a PC 1 is connected to a recording/playback apparatus 3 via the Internet 51 and a network 2 such as a LAN.

With this arrangement, for example, when the office PC 1 in an office is connected to the home recording/playback apparatus 3 via the Internet 51, so that the power supply of a home peripheral device 6 can be controlled.

### <Fourth Embodiment>

A power supply control system according to the fourth embodiment of the present invention will be described.

The power supply control system according to the fourth embodiment of the present invention can make a power supply control switch 61 connect a plurality of peripheral devices.

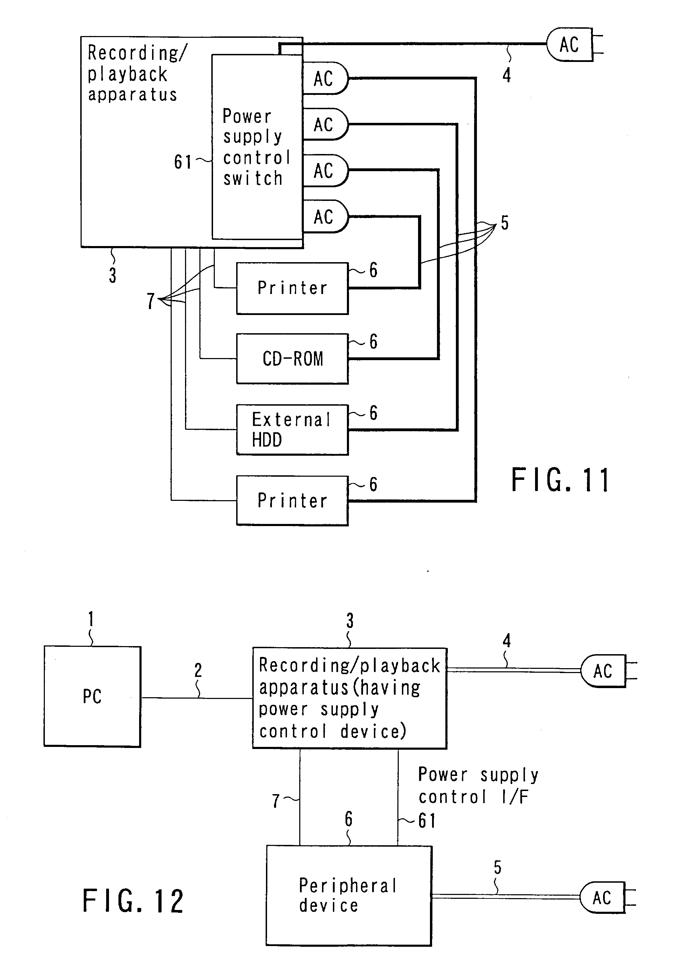

FIG. 11 is a block diagram showing a recording/ playback apparatus 3 having a power supply control device according to the fourth embodiment of the present invention. The system arrangement thereof is similar to that shown in FIG. 6, but is different from it in that the power supply control switch 61 of the recording/playback apparatus 3 has interfaces to connect to the plurality of peripheral devices, and a plurality of peripheral device interfaces 7 are connected to the recording/playback apparatus 3. Note that components other than the power supply control switch 61 shown in FIG. 11 are identical to those shown in FIG. 7, and a description thereof will be omitted.

The arrangement of the power supply control switch 61 is different from the power supply control switch 14 shown in FIG. 3 in that the power supply control interface 61 has a plurality of AC taps.

Therefore, according to the power supply control system of this embodiment, the power supplies of the plurality of peripheral devices can be controlled.

### <Fifth Embodiment>

A power supply control system according to the fifth embodiment of the present invention will be described.

Unlike the embodiments described above, the power supply control system according to the fifth embodiment of the present invention applies no power supply voltage from a power supply control device to a peripheral device. However, the system connects the power supply control device to the peripheral device by using a power supply control interface to transmit a control signal from the power supply control device to the peripheral device via this power supply control interface, thereby controlling the power supply of the peripheral device.

FIG. 12 is a block diagram showing the arrangement. of the power supply control system according to the fifth embodiment of the present invention. Note that the same reference numerals as in FIG. 1 denote the same parts in FIG. 12.

As shown in FIG. 12, the system shown in FIG. 12 is different from the system shown in FIG. 1 in that a recording/playback apparatus having a power supply control device and a peripheral device are connected to each other via a power supply control interface 61.

The power supply control interface 61 controls the power supply of the peripheral device.

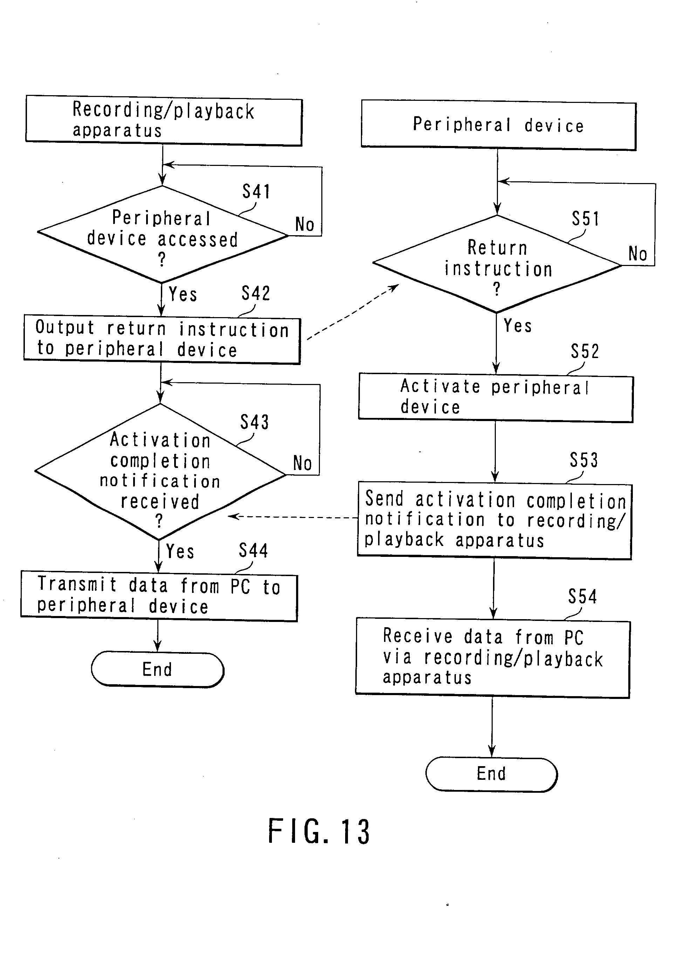

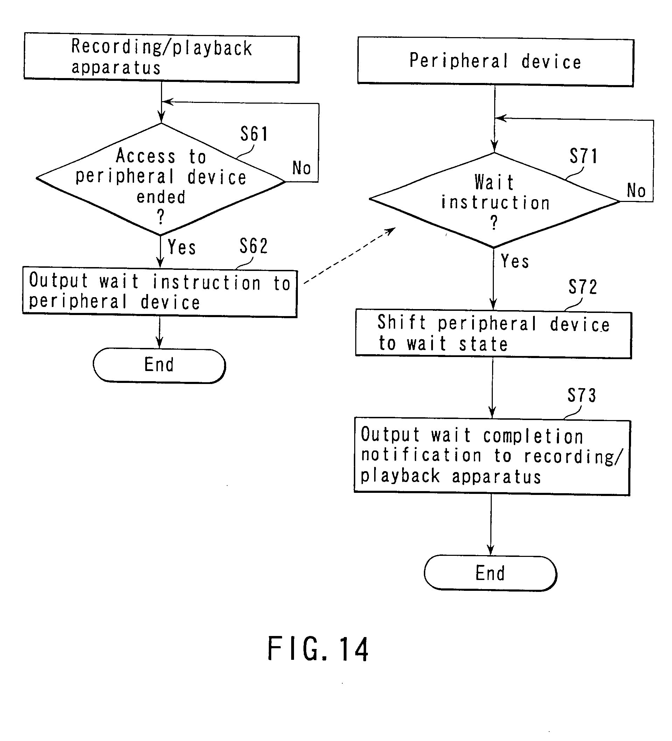

The operation of the power supply control system according to the fifth embodiment of the present invention will be described below with reference to FIGS. 13 and 14.

FIG. 13 is a flow chart for explaining the operation when the peripheral device changes from a wait state to an activated state.

First, the recording/playback apparatus determines whether a PC accesses the peripheral device (S41). If Yes in S41, the recording/playback apparatus outputs a return instruction to the peripheral device via the power supply control interface 61 (S42).

In this case, the "wait state" means a state wherein only the portion of the peripheral device which is required for communicating with the recording/ playback apparatus is energized, and other functional portions are not energized. If the PC is used as the peripheral device, the wait state includes a power saving mode such as a standby state, a suspended state, or a sleep state.

Thereafter, the recording/playback apparatus determines whether an activation completion notification is received from the peripheral device via the power supply control interface (S43). If Yes in S43, the recording/playback apparatus transmits data from the PC to the peripheral device (S44) to communicate with the peripheral device.

In contrast, the peripheral device determines whether the return instruction is output from the recording/playback apparatus (S51). If Yes in S51, the peripheral device in the wait state is activated (S52), and then outputs the activation completion notification to the recording/playback apparatus (S53). Thereafter, the peripheral device receives data from the PC via the recording/playback apparatus 3 (S54).

FIG. 14 is a flow chart for explaining the operation of the power supply control system when the peripheral device is shifted to the wait state.

In this case, the recording/playback apparatus determines whether the PC has ended the access to the peripheral device (S61). If Yes in S61, the recording/playback apparatus outputs a wait instruction to the peripheral device (S62).

In contrast, the peripheral device determines whether the wait instruction is received from the recording/playback apparatus (S71). If Yes in S71, the peripheral device is shifted to the wait state (S72), and then outputs a wait completion notification to the recording/playback apparatus (S73).

Therefore, according to this embodiment of the present invention, when the PC accesses the peripheral device, an activation instruction is output to the peripheral device via the recording/playback apparatus having the power supply control device.

Since the peripheral device in the wait state is activated by receiving the activation request, a user can manage the power supply without considering the power supply of the peripheral device.

The afore-mentioned embodiments describe the case wherein the power supply control device is built into the recording/playback apparatus, but the power supply control device may be built into any other apparatus, and may be independently installed. A printer, CD-ROM drive, and the like are used as examples of the peripheral devices, but a PC may be used as the peripheral device.

The present invention is not limited to the above embodiments and can be practiced in various modifications without departing from the spirit and scope thereof. The embodiments described above may be practiced by properly combining them with each other as much as possible. In that case, a combined effect can be obtained. The embodiments described above include the inventions in various stages, and various inventions can be extracted depending on the proper combination of the plurality of disclosed components. For example, if the invention is extracted by excluding any components from all the components represented in an embodiment, to practice the extracted invention, the excluded portion is appropriately compensated by the known technique.

## Claims

1. A power supply control device **characterized by** comprising:
means (12) for determining whether connection to an information processing apparatus is established;
a switch (14) which controls a power supply voltage applied via a power supply line to a peripheral device connected to the information processing apparatus; and
means (13) for, when the connection is established, controlling said switch to apply a power supply voltage to the peripheral device via the power supply line, and for, when no connection is established, controlling said switch to interrupt a power supply voltage applied to the peripheral device.

2. A power supply control device **characterized by** comprising:
a switch (14) to control a power supply voltage applied to a peripheral device of an information processing apparatus via a power supply line;
means (41) for detecting an access from the information processing apparatus to the peripheral device;
means (43) for detecting at least one of an end of communication between the information processing apparatus and peripheral device, and interruption of connection to the information processing apparatus; and
means (44) for, when the access is detected, controlling the switch to apply a power supply voltage to the peripheral device via the power supply line, and for, when the end of communication between the information processing apparatus and peripheral device or interruption of connection to the information processing apparatus is detected, controlling the switch to interrupt a power supply voltage applied to the peripheral device.

3. A device according to claim 1, **characterized in that** the information processing apparatus and said power supply control device are connected to each other via the Internet.

4. A device according to claim 2, **characterized in that** the information processing apparatus and said power supply control device are connected to each other via the Internet.

5. A device according to claim 2, **characterized in that** said switch is connected to a plurality of peripheral devices.

6. A power supply control device **characterized by** comprising:
a power supply control line (61) to control a power supply of a peripheral device;
means (S41) for detecting an access from an information processing apparatus to the peripheral device;
means (S42) for, when the access is detected, outputting to the peripheral device via said power supply control line a return instruction to return the peripheral device from a wait state;
means (S43) for detecting that an activation completion notification corresponding to the return instruction output is received; and
means (S44) for transmitting data from the information processing apparatus to the peripheral device when the activation completion notification is received.

7. A power supply control system comprising a power supply control device connected to an information processing apparatus, and a peripheral device of the information processing apparatus connected to said power supply control device,
**characterized in that** said power supply control device comprises:
a power supply control line (61) to control a power supply of said peripheral device;
means (S41) for detecting an access from the information processing apparatus to said peripheral device;
means (S42) for, when the access is detected, outputting to said peripheral device via the power supply control line a return instruction to return said d peripheral device from a wait state;
means (S43) for detecting that an activation completion notification corresponding to the return instruction output is received; and
means (S44) for transmitting data from the information processing apparatus to said peripheral device when receiving the activation completion notification, and
said peripheral device comprises:
means (S51) for determining whether the return instruction output from the output means is received;
means (S52) for activating said peripheral device from a power saving state when the reception of the return instruction is determined; and
means (S54) for transmitting the activation completion notification to said power supply control device after the peripheral device is activated.

8. A power supply control method in a power supply control device which controls a power supply of a peripheral device connected to an information processing apparatus,
**characterized in that** the power supply control device
comprises a switch which controls a power supply voltage applied to the peripheral device via a power supply line,
determines whether connection with the informationon processing apparatus is established, and
controls the switch to apply a power supply voltage to the peripheral device via the power supply line when connection is determined to be established, and controls the switch to interrupt a power source applied to the peripheral device when connection is determined to be not established.

9. A power supply control method in a power supply control device which controls a power supply of a peripheral device connected to an information processing apparatus,
**characterized in that** the power supply control device
comprises a switch which controls a power supply voltage applied to the peripheral device via a power supply line,
detects an access from the information processing apparatus to the peripheral device,
detects at least one of an end of communication between the information processing apparatus and peripheral device, and interruption of connection with the information processing apparatus, and
controls the switch to apply a power supply voltage to the peripheral device via the power supply line when an access is detected, and controls the switch to interrupt a power supply voltage applied to the peripheral device when the end of communication between the information processing apparatus and peripheral device or interruption of connection with the information processing apparatus is detected.

10. A power supply control method in a power supply control device which controls a power supply of a peripheral device of an information processing apparatus, **characterized by** comprising
detecting an access from the information processing apparatus to the peripheral device,
outputting to the peripheral device via the power supply line a return instruction to return the peripheral device from a wait state when an access is detected,
detecting reception of an activation completion notification corresponding to the output return instruction, and
transmitting data from the information processing apparatus to the peripheral device when the activation completion notification is received.
